# EUROPEAN PATENT APPLICATION

(11) **EP 4 047 044 A1**
(43) Date of publication of application: **24.08.2022**
(21) Application number: 20877930.6
(22) Date of filing: 12.10.2020
(51) Int. Cl.: C08J 9/12, C08J 9/228

(54) **SPACER, MANUFACTURING METHOD THEREFOR, AND COMPOSITE**

(30) Priority: 16.10.2019 JP 2019189740
(71) Applicant: Asahi Kasei Kabushiki Kaisha, Tokyo 1000006 (JP)
(72) Inventor: KASAI Tatsuaki, Tokyo 100-0006 (JP)
(74) Representative: D Young & Co LLP
(86) International application number: PCT/JP2020/038536
(87) International publication number: WO 2021/075409

(57) **Abstract**

A spacer used in an electrical device that sends and receives radio waves comprises a foam that contains a resin composition containing a thermoplastic resin or a thermosetting resin as a base resin. In a case in which the foam is not a foam formed of foam particles, a ratio (B/A) of an average value B of diameters of cells included in a range of 20% to 80% in a thickness direction from a surface of the foam relative to an average value A of diameters of cells in contact with the surface of the foam is not less than 0.3 and less than 3.0. In a case in which the foam is a foam formed of foam particles, for foam particles that are included in a range of 10% to 90% in a thickness direction from a surface of the foam, a ratio (B'/A') of an average value B' of diameters of cells included in a range of 20% to 80% in a radial direction from surfaces of the foam particles relative to an average value A' of diameters of cells in contact with the surfaces of the foam particles is not less than 0.3 and less than 3.0. Water absorption of the resin composition in a high-temperature and high-humidity environment is 2.2 mass% or less, and, when the relative permittivity of the foam at 28 GHz is taken to be εr and the dielectric dissipation factor of the foam at 28 GHz is taken to be tan δ, (εr)^{1/2} × tan δ is 0.0120 or less.

## Description

### TECHNICAL FIELD

The present disclosure relates to a spacer, a method of producing the spacer, and a composite.

### BACKGROUND

In recent years, much effort has been focused on the development of sensors for vehicles and communication technologies that utilize radio waves in a high-frequency band (frequency of 1 GHz or higher). Particularly in a high-frequency band, there has been demand for low-relative permittivity and low-dielectric loss materials in order to reduce transmission loss.

For example, Patent Literature (PTL) 1 discloses a triplate planar slot antenna having reduced relative permittivity at the frequency of use (15 GHz to 40 GHz) as a result of a ground plate, a lower layer side dielectric layer, a lower layer side copper-clad film substrate, an upper layer side dielectric layer, a slot plate, and an upper layer side copper-clad film substrate being stacked in this order and as a result of a foam sheet being used in each of the dielectric layers.

Moreover, PTL 2 discloses a foam that contains a filler dispersed in a cured product of a thermosetting resin and that has a relative permittivity of 4 or less at a frequency of 1 GHz.

### CITATION LIST

### Patent Literature

PTL 1: JP4764688B2
PTL 2: JP2017-186394A

### SUMMARY

### (Technical Problem)

However, there is room for further improvement of the foam sheet and the foam described in PTL 1 and 2 in terms of reducing relative permittivity and dielectric loss, in terms of inhibiting scattering of radio waves, in terms of further improving heat resistance, and so forth. Materials having characteristics of low relative permittivity and low dielectric loss are typically expensive materials such as fluorine-containing polymers. Moreover, it is difficult to achieve further reduction of relative permittivity and dielectric loss by altering the molecular structure of a resin.

Accordingly, the present disclosure is made in light of the problem set forth above and an objective thereof is to provide a spacer that is capable of reducing transmission loss and that is used in an electrical device that sends and receives radio waves, and also to provide a method of producing this spacer and a composite.

### (Solution to Problem)

As a result of diligent investigation to solve the problem set forth above, the inventor discovered that the problem can be solved by using a spacer that includes a resin foam and by setting the cell diameter of the foam, water absorption, and (εr)^{1/2} × tan δ of the foam (εr represents the relative permittivity of the foam at 28 GHz and tan δ represents the dielectric dissipation factor of the foam at 28 GHz) within specific ranges, and, in this manner, completed the present disclosure.

Primary features of the present disclosure are as follows.
[1] A spacer used in an electrical device that sends and receives radio waves and comprising a foam that contains a resin composition containing a thermoplastic resin or a thermosetting resin as a base resin, wherein
   in a case in which the foam is not a foam formed of foam particles, a ratio (B/A) of an average value B of diameters of cells included in a range of 20% to 80% in a thickness direction from a surface of the foam relative to an average value A of diameters of cells in contact with the surface of the foam is not less than 0.3 and less than 3.0,
   in a case in which the foam is a foam formed of foam particles, for foam particles that are included in a range of 10% to 90% in a thickness direction from a surface of the foam, a ratio (B'/A') of an average value B' of diameters of cells included in a range of 20% to 80% in a radial direction from surfaces of the foam particles relative to an average value A' of diameters of cells in contact with the surfaces of the foam particles is not less than 0.3 and less than 3.0,
   water absorption of the resin composition in a high-temperature and high-humidity environment is 2.2 mass% or less, and
   when relative permittivity of the foam at 28 GHz is taken to be εr and a dielectric dissipation factor of the foam at 28 GHz is taken to be tan δ, (εr)^{1/2} × tan δ is 0.0120 or less.
[2] The spacer according to [1], wherein the foam is not a foam formed of foam particles and has a maximum cell diameter of 1.500 mm or less.
[3] The spacer according to [1], wherein the foam is formed of foam particles and has a maximum cell diameter of 1.500 mm or less.
[4] The spacer according to [3], wherein a ratio (B'/A) of the average value B' of diameters of cells included in a range of 20% to 80% in a radial direction from surfaces of the foam particles relative to the average value A of diameters of cells in contact with the surface of the foam is not less than 0.3 and less than 3.0.
[5] The spacer according to any one of [1] to [4], wherein the spacer is directly in contact with at least part of the electrical device.
[6] The spacer according to any one of [1] to [5], wherein the foam has a flame retardance of V-2 or higher as measured by a 20 mm vertical flame test in accordance with a vertical method of UL-94.
[7] The spacer according to any one of [1] to [6], wherein the foam has a heat deflection temperature of 60°C or higher as measured in accordance with ISO 75-1 and 75-2.
[8] The spacer according to any one of [1] to [7], wherein hydrocarbon gas content in the foam is 1 mass% or less.
[9] A method of producing a spacer that is a method of producing the spacer according to [1] in a case in which the foam is formed of foam particles, comprising a step of starting to heat a base resin less than 600 seconds from completion of pressure release after a gas has been pressurized into the base resin.
[10] A composite comprising: the spacer according to any one of [1] to [8]; and a resin layer having a thickness of 0.1 mm or more.

### (Advantageous Effect)

According to the present disclosure, it is possible to provide a spacer that is capable of reducing transmission loss and that is used in an electrical device that sends and receives radio waves, and also to provide a method of producing this spacer and a composite.

### BRIEF DESCRIPTION OF THE DRAWINGS

In the accompanying drawings:
FIG. 1 is an image (×400 magnification) for when a cross-section obtained by sectioning a foam in a thickness direction was observed under a scanning electron microscope (SEM) in one embodiment of a spacer according to the present disclosure; and
FIG. 2 is an image (× 100 magnification) for when a cross-section obtained by sectioning a foam formed of foam particles in a thickness direction was observed under a scanning electron microscope (SEM) in one embodiment of a spacer according to the present disclosure.

### DETAILED DESCRIPTION

The following provides a detailed description of an embodiment of the present disclosure (hereinafter, also referred to as the "present embodiment"). However, the present disclosure is not limited to the following embodiment and may be implemented with various alterations that are within the essential scope thereof.

### [Spacer]

A spacer according to the present embodiment is used in an electrical device that sends and receives radio waves and comprises a foam that contains a resin composition containing a thermoplastic resin or a thermosetting resin as a base resin. In a case in which the foam is not a foam formed of foam particles, a ratio (B/A) of an average value B of the diameters of cells included in a range of 20% to 80% in a thickness direction from the surface of the foam relative to an average value A of the diameters of cells in contact with the surface of the foam is not less than 0.3 and less than 3.0. In a case in which the foam is a foam formed of foam particles, for foam particles that are included in a range of 10% to 90% in the thickness direction from the surface of the foam, a ratio (B'/A') of an average value B' of the diameters of cells included in a range of 20% to 80% in a radial direction from the surfaces of the foam particles relative to an average value A' of the diameters of cells in contact with the surfaces of the foam particles is not less than 0.3 and less than 3.0. Water absorption of the resin composition in a high-temperature and high-humidity environment is 2.2 mass% or less, and, when the relative permittivity of the foam at 28 GHz is taken to be εr and the dielectric dissipation factor of the foam at 28 GHz is taken to be tan δ, (εr)^{1/2} × tan δ is 0.0120 or less.

The spacer according to the present embodiment preferably includes a foam that contains a resin composition containing a thermoplastic resin or a thermosetting resin as a base resin, and is more preferably formed of this foam.

As a result of the spacer according to the present embodiment including a foam, it is possible to achieve low dielectric loss because the relative permittivity and dielectric loss of the foam are close to those of air.

Moreover, the spacer according to the embodiment is light-weight as a result of including a resin foam.

The spacer according to the present embodiment is used in an electrical device that sends and receives radio waves. The spacer according to the present embodiment is preferably disposed directly in contact with at least part of the electrical device from a viewpoint of increasing thermal insulation of the electrical device and thereby suppressing the influence of surrounding temperature changes on the electrical device and the occurrence of condensation. When condensed water becomes attached to an electrical device, dielectric loss increases significantly due to the condensed water because water causes significant attenuation of radio waves in a high-frequency band. In particular, adoption as a cover material (radome material) that is used with the aim of transmitting radio waves is preferable due to high transmittance and low likelihood of scattering of radio waves.

Although the spacer according to the present embodiment may be used inside of the device or may be used in a state with part thereof exposed at the surface of the device, the spacer is preferably used inside of the device from a viewpoint of mechanical strength such as impact resistance. However, in a case in which the spacer is used in the form of a composite that includes the spacer and a subsequently described resin layer, the spacer may suitably be used with part thereof exposed at the surface of the device because mechanical strength can be improved in this case.

The shape, size, and so forth of the spacer according to the present embodiment are not specifically limited and may be set as appropriate depending on the shape, size, and so forth of the electrical device in which the spacer is used.

### [[Foam]]

The foam included in the spacer according to the present embodiment contains a resin composition that contains a thermoplastic resin or a thermosetting resin as a base resin.

The foam according to the present embodiment may be a foam that is obtained through foaming of a resin composition that contains a base resin including a thermoplastic resin or a thermosetting resin and that optionally further contains additives such as a flame retardant.

The foam may, for example, be an extrusion foam, an injection foam, a bead foam (foam formed of foam particles), a stretching foam, a solvent extraction foam, or the like, which are respectively foams produced by extrusion foaming, injection foaming, bead foaming, stretch foaming, and solvent extraction foaming described further below.

Although the foam may have a closed cell structure or an open cell structure, the foam preferably has a closed cell structure from viewpoints of reduction of cell diameter being easier, improvement of mechanical strength of the foam being easier, and absorption of water or the like by the foam being less likely to occur.

The content of the base resin when the resin composition is taken to be 100 mass% is suitably 20 mass% or more, more suitably 40 mass% or more, even more suitably 60 mass% or more, and particularly suitably 70 mass% or more, and is suitably 100% or less, and more suitably 95% or less.

Examples of thermoplastic resins that may be used include a polyphenylene ether-based resin, a polystyrene-based resin, a polyolefin resin such as a polyethylene-based resin or a polypropylene-based resin, a polyamide-based resin, an ABS resin, a vinyl chloride-based resin, an acrylic resin, a methyl methacrylate resin, a nylon-based resin, a fluororesin, a polycarbonate-based resin, a polyurethane resin, a polyester-based resin, a polyimide-based resin, a polymer liquid-crystal resin, and a polyphenylene sulfide-based resin, with a polyphenylene ether-based resin, a polystyrene-based resin, a polyethylene-based resin, a polyamide-based resin, a polypropylene-based resin, an acrylic resin, or a polycarbonate-based resin being preferable from viewpoints of heat resistance, economy, and foaming properties. In particular, a resin having low polarity or a resin having low density is preferable as a suitable base resin in the foam according to the present disclosure, examples of which include a polyethylene-based resin, a polypropylene-based resin, a polycarbonate-based resin, a polystyrene-based resin, a polyphenylene ether-based resin, and a fluororesin.

One of these thermoplastic resins may be used individually, or two or more of these thermoplastic resins may be used in combination.

The polyphenylene ether (PPE) based resin may be a polymer represented by general formula (1), shown below.

In formula (1), R¹, R², R³, and R⁴ each indicate, independently of one another, a hydrogen atom, a halogen atom, an alkyl group, an alkoxy group, a phenyl group, or a haloalkyl group or haloalkoxy group having at least two carbon atoms between a halogen and the benzene ring in general formula (1) and not including a tertiary α-carbon atom. Moreover, n in formula (1) is an integer that represents the degree of polymerization.

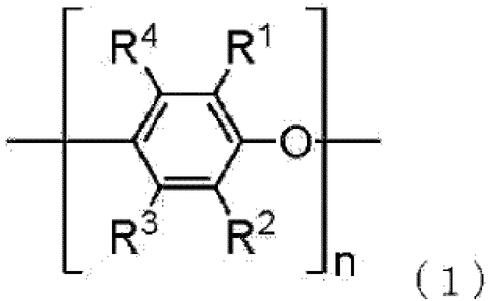

Examples of polyphenylene ether-based resins that may be used include, but are not limited to, poly(2,6-dimethyl-1,4-phenylene) ether, poly(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether, poly(2,6-dibutyl-1,4-phenylene) ether, poly(2,6-dilauryl-1,4-phenylene) ether, poly(2,6-diphenyl-1,4-diphenylene) ether, poly(2,6-dimethoxy-1,4-phenylene) ether, poly(2,6-diethoxy-1,4-phenylene) ether, poly(2-methoxy-6-ethoxy-1,4-phenylene) ether, poly(2-ethyl-6-stearyloxy-1,4-phenylene) ether, poly(2,6-dichloro-1,4-phenylene) ether, poly(2-methyl-6-phenyl-1,4-phenylene) ether, poly(2,6-dibenzyl-1,4-phenylene) ether, poly(2-ethoxy-1,4-phenylene) ether, poly(2-chloro-1,4-phenylene) ether, and poly(2,6-dibromo-1,4-phenylene) ether. Of these polyphenylene ether-based resins, particularly those for which R¹ and R² are each an alkyl group having a carbon number of 1 to 4 and R³ and R⁴ are each a hydrogen or an alkyl group having a carbon number of 1 to 4 are preferable.

One of these polyphenylene ether-based resins may be used individually, or two or more of these polyphenylene ether-based resins may be used in combination.

The content of a polyphenylene ether-based resin in the present embodiment is preferably 20 mass% to 80 mass%, more preferably 30 mass% to 70 mass%, and even more preferably 35 mass% to 60 mass% relative to 100 mass% of the base resin. It is easier to obtain excellent heat resistance and flame retardance and to reduce the relative permittivity (εr) and dielectric dissipation factor (tan δ) when the content of a PPE-based resin is 20 mass% or more. Moreover, it is easier to obtain excellent processability when the content of a PPE-based resin is 80 mass% or less.

The weight-average molecular weight (Mw) of the polyphenylene ether-based resin is preferably 20,000 to 60,000.

Note that the weight-average molecular weight (Mw) is the weight-average molecular weight that is determined by performing measurement of the resin by gel permeation chromatography (GPC) and determining the molecular weight of a peak in the chromatogram using a calibration curve that has been determined through measurement of commercially available standard polystyrenes (i.e., prepared using peak molecular weights of the standard polystyrenes).

The polystyrene-based resin is a homopolymer of styrene or a styrene derivative or a copolymer having styrene or a styrene derivative as a main component (component contained in a proportion of 50 mass% or more in the polystyrene-based resin).

The styrene derivative may be o-methylstyrene, m-methylstyrene, p-methylstyrene, t-butylstyrene, α-methylstyrene, β-methylstyrene, diphenylethylene, chlorostyrene, bromostyrene, or the like.

Examples of polystyrene-based resins that are homopolymers include polystyrene, poly(α-methylstyrene), and polychlorostyrene.

Examples of polystyrene-based resins that are copolymers include binary copolymers such as styrene-butadiene copolymer, styrene-acrylonitrile copolymer, styrene-maleic acid copolymer, styrene-maleic anhydride copolymer, styrene-maleimide copolymer, styrene-N-phenylmaleimide copolymer, styrene-N-alkylmaleimide copolymer, styrene-N-alkyl-substituted phenylmaleimide copolymer, styrene-acrylic acid copolymer, styrene-methacrylic acid copolymer, styrene-methyl acrylate copolymer, styrene-methyl methacrylate copolymer, styrene-n-alkyl acrylate copolymer, styrene-N-alkyl methacrylate copolymer, and ethyl vinyl benzene-divinylbenzene copolymer; ternary copolymers such as ABS and butadiene-acrylonitrile-α-methylbenzene copolymer; and graft copolymers such as styrene-grafted polyethylene, styrene-grafted ethylene-vinyl acetate copolymer, (styrene-acrylic acid)-grafted polyethylene, and styrene-grafted polyamide.

One of these polystyrene-based resins may be used individually, or two or more of these polystyrene-based resins may be used in combination.

The polyethylene-based resin may be a resin of high-density polyethylene, low-density polyethylene, linear low-density polyethylene, copolymer of ethylene and an α-olefin, propylene-ethylene copolymer, or the like.

One of these polyethylene-based resins may be used individually, or two or more of these polyethylene-based resins may be used in combination.

Moreover, these polyethylene-based resins may have a structure that is suitably cross-linked through a cross-linker or the like.

The polyamide-based resin may be a polyamide, a polyamide copolymer, or a mixture thereof, for example. The polyamide-based resin may include a polymer obtained through self-condensation of an aminocarboxylic acid, ring-opening polymerization of a lactam, or polycondensation of a diamine and a dicarboxylic acid.

The polyamide may be nylon 66, nylon 610, nylon 612, nylon 46, nylon 1212, or the like that is obtained through polycondensation of a diamine and a dicarboxylic acid, or may be nylon 6, nylon 12, or the like that is obtained through ring-opening polymerization of a lactam.

The polyamide copolymer may be nylon 6/66, nylon 66/6, nylon 66/610, nylon 66/612, nylon 66/6T (T represents a terephthalic acid component), nylon 66/6I (I represents an isophthalic acid component), nylon 6T/6I, or the like, for example.

The mixture of any of these polymers may be a mixture of nylon 66 and nylon 6, a mixture of nylon 66 and nylon 612, a mixture of nylon 66 and nylon 610, a mixture of nylon 66 and nylon 61, a mixture of nylon 66 and nylon 6T, or the like, for example.

One of these polyamide-based resins may be used individually, or two or more of these polyamide-based resins may be used in combination.

The content of any of these thermoplastic resins other than PPE-based resins in the present embodiment is preferably 10 mass% to 100 mass%, and more preferably 20 mass% to 80 mass% relative to 100 mass% of the base resin from a viewpoint of processability of the foam.

Examples of thermosetting resins that may be used include a phenolic resin, an epoxy resin, an unsaturated polyester resin, a polyurethane, and a melamine resin, with a phenolic resin or a melamine resin being preferable.

One of these thermosetting resins may be used individually, or two or more of these thermosetting resins may be used in combination.

Examples of additives that may be used include flame retardants, flame retardant synergists, heat stabilizers, antioxidants, antistatic agents, inorganic fillers, anti-dripping agents, ultraviolet absorbers, light absorbers, plasticizers, mold release agents, dyes/pigments, rubber components, and resins other than the base resin, and these additives may be added to the extent that the effects disclosed herein are not lost.

The content of additives when the base resin is taken to be 100 parts by mass is suitably 0 parts by mass to 40 parts by mass, and more suitably 5 parts by mass to 30 parts by mass.

Examples of flame retardants that may be used include organic flame retardants and inorganic flame retardants without any specific limitations.

Examples of organic flame retardants include halogenated compounds, representative examples of which are bromine compounds, and non-halogenated compounds, representative examples of which are phosphorus-based compounds and silicone-based compounds.

Examples of inorganic flame retardants include metal hydroxides, representative examples of which are aluminum hydroxide and magnesium hydroxide, and antimony-based compounds, representative examples of which are antimony trioxide and antimony pentoxide.

One of these flame retardants may be used individually, or two or more of these flame retardants may be used in combination.

Of these flame retardants, non-halogenated flame retardants that are organic flame retardants are preferable from an environmental perspective, with phosphorus-based flame retardants and silicone-based flame retardants being more preferable.

A flame retardant that includes phosphorus or a phosphorus compound can be used as a phosphorus-based flame retardant. The phosphorus may be red phosphorus. The phosphorus compound may be a phosphate ester, a phosphazene compound having a bond between a phosphorus atom and a nitrogen atom in a main chain thereof, or the like.

Examples of phosphate esters that may be used include trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixylenyl phosphate, cresyl diphenyl phosphate, dicresyl phenyl phosphate, dimethyl ethyl phosphate, methyl dibutyl phosphate, ethyl dipropyl phosphate, hydroxyphenyl diphenyl phosphate, and resorcinol bis(diphenyl phosphate). Moreover, phosphate ester compounds of a type obtained through modification of any of the preceding examples with any of various substituents and various condensation-type phosphate ester compounds may be used.

Of these examples, triphenyl phosphate and condensation-type phosphate ester compounds are preferable from viewpoints of heat resistance, flame retardance, and foaming properties.

One of these phosphorus-based flame retardants may be used individually, or two or more of these phosphorus-based flame retardants may be used in combination.

The silicone-based flame retardant may be a (mono or poly)organosiloxane.

Examples of (mono or poly)organosiloxanes include monoorganosiloxanes such as dimethylsiloxane and phenylmethylsiloxane; polydimethylsiloxane and polyphenylmethylsiloxane that are obtained through polymerization of these monoorganosiloxanes; and organopolysiloxanes such as copolymers of these monoorganosiloxanes.

In the case of an organopolysiloxane, a bonding group of a main chain or branched side chain thereof may be a hydrogen, an alkyl group, or a phenyl group, and is preferably a phenyl group, a methyl group, an ethyl group, or a propyl group, but is not limited thereto. Moreover, a terminal bonding group may be a hydroxy group, an alkoxy group, an alkyl group, or a phenyl group. The form of the silicone may be any form such as an oil form, gum form, varnish form, powder form, or pellet form without any specific limitations.

One of these silicone-based flame retardants may be used individually, or two or more of these silicone-based flame retardants may be used in combination.

The content of the flame retardant may be set within the range for content of an additive, and, when the base resin is taken to be 100 parts by mass, is suitably 0 parts by mass to 30 parts by mass, and more suitably 5 parts by mass to 25 parts by mass. Although adding more of a flame retardant makes it easier to obtain an effect of improving flame retardance of the foam, the addition of a flame retardant generally tends to increase the relative permittivity and dielectric dissipation factor.

Examples of rubber components that may be used include butadiene, isoprene, 1,3-pentadiene, and the like, but are not limited thereto. Such a rubber component is preferably a component that is dispersed in a particulate form in a continuous phase formed of a polystyrene-based resin. The method by which any of these rubber components is added may be by adding the rubber component itself or by using a resin such as a styrene-based elastomer or a styrene-butadiene copolymer as a rubber component supply source.

In a case in which a rubber component is added, the content of the rubber component may be set within the range for the content of an additive, and, when the base resin is taken to be 100 parts by mass, is preferably 0.3 parts by mass to 15 parts by mass, more preferably 0.5 parts by mass to 8 parts by mass, and even more preferably 1 part by mass to 5 parts by mass. When the content is 0.3 parts by mass or more, it is easy to obtain a foam having excellent resin flexibility and extension, a low tendency for foam cell membranes to rupture during foaming, and excellent shaping processability and mechanical strength.

In the present embodiment, although adding more of a flame retardant to the resin composition is preferable for improving flame retardance of the spacer, increasing the additive amount of the flame retardant has a negative influence on foaming properties. In such a situation, a rubber component may suitably be used in order to impart foaming properties to the resin composition. In particular, the rubber component described above is important in bead foaming in which the temperature is gradually increased from normal temperature and in which a resin is foamed in a non-molten state.

### (Water absorption of resin composition in high-temperature and high-humidity environment)

In general, in a situation in which a spacer is used with the aim of transmitting radio waves in a band of 1 GHz to 300 GHz, the presence of moisture is known to cause significant dielectric loss, refraction, scattering, and the like of radio waves. In particular, since there are instances in which an electrical device that sends and receives radio waves is, depending on the installation environment thereof, used under high-temperature and high-humidity conditions, it is necessary for a spacer to have low water absorption even in a high-temperature and high-humidity environment. When a resin composition used in a foam that is a constituent of a spacer has low water absorption, it is possible to reduce effects such as described above and to improve the quality with which radio waves are sent and received.

From this viewpoint, the water absorption in a high-temperature and high-humidity environment of the resin composition used in the foam according to the present embodiment is 2.2 mass% or less, preferably 1.5 mass% or less, more preferably 1.0 mass% or less, and even more preferably 0.5 mass% or less. Although no specific stipulations are made for the lower limit, the lower limit is preferably 0.01 mass% or more, for example.

In a situation in which the water absorption in a high-temperature and high-humidity environment is more than 2.2 mass%, water absorption causes increased dielectric loss by increasing the relative permittivity and dielectric dissipation factor, refraction, scattering, reflection, and the like occur in a case in which water is present in a localized manner, it becomes harder to achieve the intended radio wave transmittance, and quality of communication using radio waves tends to deteriorate. In the case of a resin composition having high water absorption at high-temperature and high-humidity, it is generally easy for a difference to arise compared to water absorption under conditions such as room temperature (for example, 23°C and 55% relative humidity), and thus the impact on communication quality tends to vary significantly depending on the environment.

Examples of methods by which the water absorption of a resin composition in a high-temperature and high-humidity environment can be reduced include reducing the polarity of the base resin, reducing the number of polar groups at terminals of molecular chains, and so forth. Examples of suitable resins include a polyolefin-based resin, a polystyrene-based resin, a polyphenylene ether-based resin, a polyimide-based resin, a fluororesin, a polymer liquid-crystal resin, and a polyphenylene sulfide-based resin. Of these resins, a polyolefin-based resin, a polystyrene-based resin, and a polyphenylene ether-based resin are preferable when also taking into account viewpoints of processability, cost, and flame retardance.

Note that the water absorption of the resin composition in a high-temperature and high-humidity environment is the water absorption measured at a temperature of 60°C and a relative humidity of 85% and can, more specifically, be measured by a method described in the EXAMPLES section.

### (Expansion ratio of foam)

The expansion ratio of the foam according to the present embodiment is preferably 1.5 cm³/g to 50 cm³/g, more preferably 2.0 cm³/g to 30 cm³/g, and even more preferably 3.0 cm³/g to 25 cm³/g. When the expansion ratio is within any of the ranges set forth above, it tends to be easy to maintain excellent rigidity while also obtaining low relative permittivity and a low dielectric dissipation factor, in addition to improving light weight and thermal insulation.

Note that the expansion ratio can, more specifically, be measured by a method described in the EXAMPLES section.

### (Surface layer cell diameter and central section cell diameter of cells in foam)

In the present specification, the phrase "cells in contact with the surface of the foam" (surface layer cells) refers to cells that, among cells included entirely in the foam, are cells having an outline that partially coincides with a line indicating the surface of the foam in a situation in which a cross-section obtained through sectioning of the foam in a thickness direction is observed.

Moreover, in the present specification, the phrase "cells included in a range of 20% to 80% in a thickness direction from the surface of the foam" (central section cells) refers to cells that, among cells included entirely in the foam, are cells that are at least partially included in a range of 20% to 80% of thickness from the surface of the foam when the thickness of the foam is taken to be 100% and that are not in contact with the surface of the foam (i.e., are not surface layer cells) in a situation in which a cross-section obtained through sectioning of the foam in the thickness direction is observed.

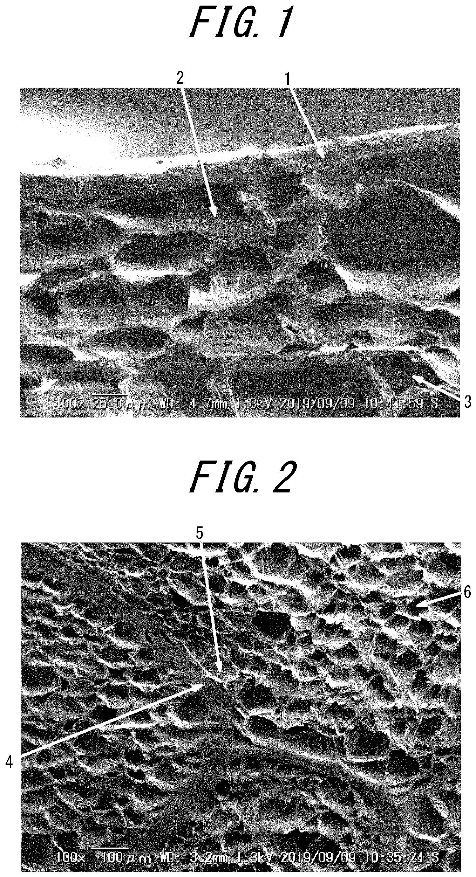

FIG. 1 is an image for when a cross-section obtained by sectioning one example of a foam according to the present embodiment in a thickness direction was observed under a scanning electron microscope (SEM). In FIG. 1, a cell 2, for example, has an outline that partially coincides with a line 1 indicating the surface of the foam and thus is a surface layer cell. Moreover, a cell 3 is at least partially included in a range of 20% to 80% (not illustrated) in the thickness direction from the surface of the foam and thus is a central section cell.

Note that measurement of cell diameter is performed by observing a cross-section obtained by sectioning the foam in the thickness direction using a scanning electron microscope (SEM) and then measuring, as the diameter of a cell, a line segment having a largest length among the lengths of line segments joining two points on the outline of that cell.

An average value A for surface layer cell diameter is taken to be a value obtained by measuring the diameters of at least 15 surface layer cells and then averaging the measured values. Moreover, an average value B for central section cell diameter is taken to be a value obtained by measuring the diameters of at least 30 central section cells and then averaging the measured values.

Note that the surface layer cell diameter and the central section cell diameter can, more specifically, be measured by a method described in the EXAMPLES section.

In a case in which the foam according to the present embodiment is a foam (for example, an extrusion foam, an injection foam, a stretching foam, a solvent extraction foam, or the like) that is not a foam formed of foam particles (i.e., a bead foam), a ratio (B/A) of the average value B for central section cell diameter relative to the average value A for surface layer cell diameter is not less than 0.3 and not more than 3.0, preferably not less than 0.5 and less than 2.0, and more preferably 0.6 to 1.8. A foam for which B/A is within any of the ranges set forth above has excellent uniformity of relative permittivity and can reduce refraction and scattering of radio waves as a result of having uniform foaming properties.

### (Outermost layer cell diameter and center cell diameter of cells in foam particles)

In the present specification, the phrase "cells in contact with surfaces of foam particles" (outermost layer cells) refers to cells that, for foam particles having the entirety thereof, surrounded by a line indicating the surface of the foam particle (foam particle outline), included in a range of 10% to 90% in a thickness direction from the surface of a foam formed of foam particles, are cells that, among cells included entirely in the foam particle, have an outline partially coinciding with the line indicating the surface of the foam particle (foam particle outline) in a situation in which a cross-section obtained by sectioning the foam in a thickness direction is observed.

Moreover, in the present specification, the phrase "cells included in a range of 20% to 80% in a radial direction from surfaces of foam particles" (center cells) refers to cells that, for foam particles having the entirety thereof, surrounded by a line indicating the surface of the foam particle (foam particle outline), included in a range of 10% to 90% in a thickness direction from the surface of a foam formed of foam particles, are cells that, among cells included entirely in the foam particle, are at least partially included in a range of 20% to 80% of diameter from the surface of the foam particle when the diameter of the foam particle is taken to be 100% and that are not in contact with the surface of the foam particle (i.e., are not outermost layer cells) in a situation in which a cross-section obtained by sectioning the foam in a thickness direction is observed.

FIG. 2 is an image for when a cross-section obtained by sectioning one example of a foam formed of foam particles according to the present embodiment in a thickness direction was observed under a scanning electron microscope (SEM). In FIG. 2, a cell 5, for example, has an outline that partially coincides with a line (foam particle outline) 4 indicating the surface of a foam particle and thus is an outermost layer cell. Moreover, a cell 6 is at least partially included in a range of 20% to 80% (not illustrated) in a radial direction from the surface of a foam particle and thus is a center cell.

Note that a foam formed of foam particles is considered to be a foam in which foam particles (particles originating from pre-expanded particles) constitute 50 mass% or more of the foam.

The foam formed of foam particles may be solid with the exception of cells present in the foam particles and may not have spaces (cells) between the foam particles.

Note that in measurement of cell diameter, only cells for which the entirety thereof is clearly observable from a cross-sectional image when a cross-section obtained by sectioning the foam in the thickness direction is observed using a scanning electron microscope (SEM) are used as measurement subjects, and a line segment having a largest length among the lengths of line segments joining two points on the outline of a cell is measured as the diameter of that cell.

An average value A' for outermost layer cell diameter is taken to be a value obtained by measuring the diameters of at least 15 surface layer cells and then averaging the measured values. Moreover, an average value B' for center cell diameter is taken to be a value obtained by measuring the diameters of at least 30 central section cells and then averaging the measured values.

Note that the outermost layer cell diameter and the center cell diameter can, more specifically, be measured by a method described in the EXAMPLES section.

In a case in which the foam according to the present embodiment is a foam formed of foam particles, a ratio (B'/A') of the average value B' for center cell diameter relative to the average value A' for outermost layer cell diameter is not less than 0.3 and not more than 3.0, preferably not less than 0.5 and less than 2.0, and more preferably 0.6 to 1.8. A foam for which B'/A' is within any of the ranges set forth above has excellent uniformity of relative permittivity in an inner section of the foam and can reduce refraction and scattering of radio waves as a result of having uniform foaming properties.

Moreover, in a case in which the foam according to the present embodiment is a foam formed of foam particles, a ratio (B'/A) of the average value B' for center cell diameter relative to the average value A for surface layer cell diameter is preferably not less than 0.3 and not more than 3.0, more preferably not less than 0.5 and less than 2.0, and even more preferably 0.6 to 1.8. A foam for which B'/A is within any of the ranges set forth above has excellent uniformity of relative permittivity in proximity to the surface of the foam and can reduce refraction and scattering of radio waves as a result of having uniform foaming properties.

### (Maximum cell diameter of cells in foam)

The maximum cell diameter of cells in the foam according to the present embodiment is preferably 1.500 mm or less, more preferably 1.300 mm or less, even more preferably 1.000 mm or less, further preferably 0.800 mm or less, and particularly preferably 0.500 mm or less. In a high-frequency band, scattering of radio waves occurs when structures of a similar size to the wavelength are present. However, when the maximum cell diameter is 1.500 mm or less, scattering of radio waves in a high-frequency band can be reduced because cells included in the foam have a small diameter. In particular, scattering of radio waves becomes less likely to occur with decreasing maximum cell diameter relative to the wavelength of the radio waves.

From this viewpoint, "maximum cell diameter/wavelength" for the foam at 28 GHz is preferably less than 0.15, more preferably 0.12 or less, and even more preferably 0.10 or less.

In the present specification, in the case of a foam other than a bead foam, the "maximum cell diameter" of cells in the foam is taken to be the largest value among all of the previously described measurement values for surface layer cell diameter and central section cell diameter in the foam. In the case of a bead foam, the "maximum cell diameter" is taken to be the largest value among all of the previously described measurement values for surface layer cell diameter in the foam and outermost layer cell diameter and center cell diameter in foam particles.

In the case of a bead foam, for example, the method by which the maximum cell diameter in the foam is controlled to within any of the ranges set forth above may be by shortening the time from when the release of impregnation pressure of gas to the base resin is completed up until when heating (foaming) starts as described further below. This can reduce uneven impregnation of gas in the foam particles at the point at which heating starts during foaming and can provide a more uniform cell diameter in the foam while also preventing the cell diameter from increasing. In addition, examples of typical methods for reducing the maximum cell diameter in a foam include increasing the concentration of a blowing agent in the base resin during a foaming step, increasing the pressure and/or lowering the temperature of a gas that is impregnated into the base resin in an impregnation step in a case in which a blowing agent that is a gas is used, adjusting the foaming temperature in a foaming step, adjusting the surface tension of the base resin, adjusting the glass-transition temperature of the base resin, and so forth.

### (Relative permittivity εr and dielectric dissipation factor tan δ of foam)

When the relative permittivity of the foam according to the present embodiment at 28 GHz is taken to be εr and the dielectric dissipation factor of the foam at 28 GHz is taken to be tan δ, (εr)^{1/2} × tan δ is 0.0120 or less, preferably 0.010 or less, and more preferably 0.0080 or less. Although no specific limitations are placed on the lower limit, the lower limit may, for example, be 0.00001 or more. In general, loss that occurs when radio waves pass through a dielectric tends to increase with increasing frequency. However, when (εr)^{1/2} × tan δ is within any of the ranges set forth above, low transmission loss can be achieved even in a high-frequency band (1 GHz to 100 GHz).

The relative permittivity εr of the foam according to the present embodiment at 28 GHz is preferably 1.00 to 5.00, and more preferably 1.00 to 3.00.

Moreover, the dielectric dissipation factor tan δ of the foam according to the present embodiment at 28 GHz is preferably 0.05 or less, more preferably 0.03 or less, and even more preferably 0.01 or less.

The method by which (εr)^{1/2} × tan δ is controlled to within any of the ranges set forth above may be by selecting a resin having a low relative permittivity εr and/or dielectric dissipation factor tan δ as the base resin of the foam, by increasing the expansion ratio of the foam, by selecting an additive for addition to the base resin, or the like, for example.

Moreover, the method by which the relative permittivity εr and the dielectric dissipation factor tan δ of the base resin used in the foam are reduced may be by selecting a resin having a low non-foamed resin density, a resin having a low non-foamed resin polarity, a resin having few polar groups at terminals of molecular chains, or the like as the base resin. Examples of resins that are particularly suitable from this viewpoint include a polyolefin-based resin, a polystyrene-based resin, a polyphenylene ether-based resin, a polyimide-based resin, a fluororesin, a polymer liquid-crystal resin, and a polyphenylene sulfide-based resin. Of these resins, a polyolefin-based resin, a polystyrene-based resin, and a polyphenylene ether-based resin are preferable when taking into account viewpoints of processability, cost, and flame retardance.

Note that the relative permittivity εr and the dielectric dissipation factor tan δ can, more specifically, be measured by a method described in the EXAMPLES section.

### (Heat deflection temperature of foam)

The heat deflection temperature (HDT) of the foam according to the present embodiment as measured in accordance with ISO 75-1 and 75-2 is preferably 60°C or higher, more preferably 80°C or higher, and even more preferably 100°C or higher. The heat deflection temperature of the foam can be altered through the magnitude of the expansion ratio during production. When the heat deflection temperature of the foam is 60°C or higher, it is possible to obtain a spacer having excellent heat resistance and structural stability.

The heat deflection temperature can also be altered through the type of resin. Accordingly, the heat deflection temperature of the foam can be improved by selecting a resin with which it is easy to raise the heat deflection temperature (typically a resin having a high glass-transition temperature). In a situation in which a resin with which it is easy to raise the heat deflection temperature is used as the base resin of the foam, it generally tends to be easier to reduce the cell diameter, though this is dependent on the heating conditions during shaping, the previously described gas impregnation conditions, and so forth.

Note that the heat deflection temperature can, more specifically, be measured by a method described in the EXAMPLES section.

### (Flame retardance of foam)

The foam according to the present embodiment preferably has a flame retardance of V-2 or higher, more preferably has a flame retardance of V-1 or higher, and even more preferably has a flame retardance of V-0 according to standard UL-94. The flame retardance can be altered through the type of resin used in production and also through the type and content of flame retardance used with the resin. By using a foam having high flame retardance, it is possible to inhibit the spread of combustion even supposing that combustion occurs as a result of a short, explosion, or the like in the electrical device.

Note that the flame retardance according to standard UL-94 can, more specifically, be measured by a method described in the EXAMPLES section.

### (Hydrocarbon gas content in foam)

The hydrocarbon gas content in the foam according to the present embodiment is preferably 1 mass% or less, more preferably 0.5 mass% or less, and even more preferably 0.1 mass% or less. When the hydrocarbon gas content is 1 mass% or less, it is easier to maintain flame retardance, and expansion after foam shaping (post-shaping blistering) can be inhibited, thereby enabling improvement of dimensional stability of the foam, improvement of the uniformity of cells, and reduction of the maximum cell diameter.

Note that the hydrocarbon gas content can be measured by gas chromatography and, more specifically, can be measured by a method described in the EXAMPLES section.

### [Production method of foam]

The method by which the foam according to the present embodiment is produced is not specifically limited and may be extrusion foaming, injection foaming, bead foaming (in-mold foaming), stretch foaming, solvent extraction foaming, or the like, for example.

Extrusion foaming is a method in which an organic or inorganic blowing agent is pressurized into a molten resin using an extruder and then pressure is released at an outlet of the extruder to obtain a foam in a plate, sheet, or columnar form having a fixed cross-sectional shape.

Injection foaming is a method in which a resin having foaming properties is injection molded and is foamed inside a mold so as to obtain a foam including pores.

Bead foaming (in-mold foaming) is a method in which foam particles are loaded into a mold and are then heated by steam or the like so as to cause expansion of the foam particles and, simultaneously thereto, thermal fusion of the foam particles to one another to thereby obtain a foam.

Stretch foaming is a method in which an additive such as a filler is kneaded in a resin in advance and then the resin is stretched so as to form microvoids and thereby produce a foam.

Solvent extraction foaming is a method in which an additive that dissolves in a specific solvent is added to a resin in advance and then a shaped product is immersed in the specific solvent so as to extract the additive and thereby produce a foam.

In the case of extrusion foaming, the obtained foam has a plate form, sheet form, or the like and thus a punching step of cutting the foam to a desired shape and a thermal bonding step of bonding the cut-out parts are required in order to process the foam.

In contrast, it is easy to shape a foam into a finer shape or a more complicated shape in the case of bead foaming because a mold of a desired shape can be produced and then foam particles can be loaded into the mold and be shaped.

Although shaping of a foam with a complicated shape is also possible in the case of injection foaming, it is easier to increase the expansion ratio of the foam and to achieve flexibility in addition to thermal insulation in the case of bead foaming.

A typically used gas can be used as a blowing agent without any specific limitations.

Examples of blowing agents that may be used include inorganic gases such as air, carbon dioxide gas, nitrogen gas, oxygen gas, ammonia gas, hydrogen gas, argon gas, helium gas, and neon gas; fluorocarbons such as trichlorofluoromethane (R11), dichlorodifluoromethane (R12), chlorodifluoromethane (R22), tetrachlorodifluoroethane (R112), dichlorofluoroethane (R141b), chlorodifluoroethane (R142b), difluoroethane (R152a), HFC-245fa, HFC-236ea, HFC-245ca, and HFC-225ca; saturated hydrocarbons such as propane, n-butane, i-butane, n-pentane, i-pentane, and neopentane; ethers such as dimethyl ether, diethyl ether, methyl ethyl ether, isopropyl ether, n-butyl ether, diisopropyl ether, furan, furfural, 2-methylfuran, tetrahydrofuran, and tetrahydropyran; ketones such as dimethyl ketone, methyl ethyl ketone, diethyl ketone, methyl n-propyl ketone, methyl n-butyl ketone, methyl i-butyl ketone, methyl n-amyl ketone, methyl n-hexyl ketone, ethyl n-propyl ketone, and ethyl n-butyl ketone; alcohols such as methanol, ethanol, propyl alcohol, i-propyl alcohol, butyl alcohol, i-butyl alcohol, and t-butyl alcohol; carboxylic acid esters such as formic acid methyl ester, formic acid ethyl ester, formic acid propyl ester, formic acid butyl ester, formic acid amyl ester, propionic acid methyl ester, and propionic acid ethyl ester; and chlorinated hydrocarbons such as methyl chloride and ethyl chloride.

One of these blowing agents may be used individually, or two or more of these blowing agents may be used in combination.

The blowing agent preferably displays little or no combustibility or combustion support from a viewpoint of flame retardance, and is more preferably an inorganic gas from a viewpoint of gas safety. An inorganic gas has a low tendency to dissolve in a resin compared to an organic gas such as a hydrocarbon and can easily escape from a resin after a foaming step or shaping step, which is beneficial in providing better dimensional stability over time of the foam after shaping. Moreover, in a situation in which an inorganic gas is used, this has a benefit that plasticization of a resin due to residual gas tends not to occur and that excellent heat resistance can be displayed at an earlier stage without going through a step of aging or the like. Of inorganic gases, carbon dioxide gas is preferable from viewpoint of solubility in a resin and ease of handling. Hydrocarbon-based organic gases generally have high combustibility and tend to cause poorer flame retardance when they remain in a foam.

The foam according to the present embodiment is preferably produced by the bead foaming described above and is preferably formed of foam particles.

By performing shaping by bead foaming, it is possible to improve formability of the spacer.

The foam particles used in bead foaming can be obtained by causing the inclusion (impregnation) of a blowing agent in a base resin and then causing foaming to occur. More specifically, the foam particles may be produced by, for example, in accordance with a method described in Example 1 of JP-H4-372630A, loading a base resin (pellets, beads, etc.) into a pressure-resistant vessel, purging gas inside the vessel with dry air, injecting a blowing agent (gas), impregnating the base resin with the blowing agent (gas), and subsequently releasing the pressure and transferring the base resin pellets from the pressure-resistant vessel to a foaming furnace where they are heated and caused to foam through pressurized steam while rotating an impeller.

Although no specific limitations are placed on the conditions under which the base resin is impregnated with the foaming agent (gas), an impregnation pressure of 0.3 MPa to 30 MPa, an impregnation temperature of -20°C to 100°C, and an impregnation time of 10 minutes to 96 hours, for example, are preferable from a viewpoint of causing impregnation of the base resin with the blowing agent (gas) to proceed more efficiently. Moreover, the maximum vapor pressure of pressurized steam inside the foaming furnace is preferably 30 kPa·G to 700 kPa·G from a viewpoint of more easily obtaining the desired expansion ratio and achieving a better external appearance.

In the production method of the foam particles described above, the time from when release of pressure inside of the pressure-resistant vessel (release of impregnation pressure) is completed up until when heating by pressurized steam inside the foaming furnace starts is preferably less than 600 seconds, more preferably 300 seconds or less, even more preferably 120 seconds or less, and particularly preferably 60 seconds or less. When this time is within any of the ranges set forth above, a more uniform cell diameter can be achieved and an increase of the cell diameter can be prevented because gas impregnated in the base resin can be inhibited from spreading out unevenly in the base resin.

The method by which a foam is shaped using the foam particles is not specifically limited and may, for example, be a method in which the foam particles are loaded into a cavity of a shaping mold, are heated so as to cause expansion and, simultaneously thereto, thermal fusion of the foam particles to one another, and then cooling is performed to solidify the product and perform shaping. A commonly known method can be adopted as the loading method of the foam particles without any specific limitations.

The foam particles are preferably subjected to pressurization treatment with a gas prior to being loaded into the cavity of the shaping mold. By providing a fixed gas pressure inside cells of the foam particles, it is possible to cause strong fusion of constituent foam particles of the resultant foam and to enhance the rigidity and external appearance of a shaped product. The gas used in the pressurization treatment is not specifically limited but is preferably air or an inorganic gas from a viewpoint of ease of handling and economy. The method of pressurization treatment is not specifically limited and may be a method in which the foam particles are loaded into a pressurization vessel, pressurized gas is introduced, and the gas is supplied to inside of the pressurization vessel by increasing the pressure to a maximum pressure of 0.1 MPa to 20 MPa over 10 minutes to 96 hours.

The method of heating during shaping of the foam particles may be heating using a heating medium such as steam, heating by a heater such as an IR heater, heating using microwaves, or the like. In the case of heating using a heating medium, a general purpose heating medium may be used, with steam being preferable from a viewpoint of efficiently heating the resin.

The method by which the foam is processed into a desired shape in the present embodiment is not specifically limited and may be a method in which foam particles or a molten resin is loaded into a mold and is shaped, a method in which the foam is cut by a blade such as a saw blade or die-cutting blade, a method in which machining is performed by a mill, or a method in which a plurality of foams are adhered through heating or an adhesive.

The foam according to the present embodiment may be used individually or may be used in combination with a non-foamed resin or the like. In such a case, objects that have each undergone shaping processing may be adhered and then used, or integral shaping may be performed and then the product thereof may be used.

The shape, size, thickness, and so forth of the foam according to the present embodiment can be set as appropriate depending on the shape, size, thickness, and so forth of the spacer without any specific limitations, but the thickness of the foam according to the present embodiment is preferably within a range of 0.3 mm to 300 mm from a viewpoint of being easy to obtain a uniform cell diameter.

### (Composite)

In a situation in which the spacer including the foam according to the present embodiment is used as a cover material that is to transmit radio waves, for example, the spacer may be combined with a resin layer and be used as a composite with the aim of improving mechanical strength, weatherability, and flame retardance.

The method of combination may, for example, be a method in which the spacer and the resin layer are affixed by an adhesive.

The constituent resin of the resin layer is preferably a resin having excellent mechanical strength and dielectric characteristics. For example, a resin that is suitable for reducing the relative permittivity εr and dielectric dissipation factor tan δ as previously described or a polycarbonate, ABS resin, ASA resin, AES resin, AS resin, ACS resin, AAS resin, or the like having excellent mechanical strength (particularly impact resistance) is preferably used.

In order to improve radio wave transmittance and reduce scattering, refraction, and the like, it is preferable that the resin layer does not contain glass fiber or carbon fiber.

Moreover, the thickness of the resin layer is preferably 0.1 mm to 3 mm, and more preferably 0.1 mm to 2.0 mm from a viewpoint of increasing mechanical strength while also improving radio wave transmittance.

The adoption of a bead foam as the foam included in the spacer that is used in the composite is preferable in terms of providing good formability, in terms that a cut surface of the foam is not exposed and the formation of dust or the like can be reduced because secondary processing of the foam is not necessary, and in terms that a resin or adhesive is prevented from infiltrating a cut surface of the foam when the resin layer and the spacer are combined, and thus good external appearance, close adherence, and radio wave transmission characteristics are obtained.

### EXAMPLES

The following provides a more detailed description of the present disclosure through examples. However, the present disclosure is not in any way limited by the following examples.

Evaluation methods used in the examples, comparative examples, and reference examples were as follows.

### (1) Expansion ratio of foam

A sample of roughly 30 mm-square and 10 mm in thickness was cut out from a foam obtained in each of the subsequently described examples and comparative examples. The mass W (g) of this sample was measured, and a value (V/W) obtained by dividing the sample volume (cm³) by the mass was taken to be the expansion ratio (cm³/g).

Note that in a case in which the cutting described above is difficult, the same material as in each example or comparative example may be prepared, the sample mass may be measured, the volume may be measured by submersion, and then these values may be used to calculate the density.

### (2) Heat deflection temperature (HDT) of foam

Measurement of heat deflection temperature of a foam obtained in each of the subsequently described examples and comparative examples was performed in accordance with ISO 75-1 and 75-2 as described below.

First, a sample of 80 mm (length) × 13 mm (width) × 10 mm (thickness) was cut out from the foam obtained in each of the subsequently described examples and comparative examples. Next, the sample was set up in an HDT Tester Machine Test (model: 3M-2) produced by Toyo Seiki Seisaku-Sho, Ltd. with a distance between fulcrums of 64 mm. A pressing jig was set up with respect to a central section of the set-up sample, and this setup was immersed in an oil bath in a state in which a pressure of 0.45 MPa was applied. The temperature was subsequently increased at a rate of 120°C/hr, and the sample temperature at a point at which the pressing jig moved to a bending threshold of 0.34 mm was taken to be the heat deflection temperature (°C).

### (3) Flame retardance of foam

A foam obtained in each of the subsequently described examples and comparative examples was subjected to a test in accordance with the UL-94 vertical method (20 mm vertical flame test) of UL standards (United States of America) so as to evaluate flame retardance.

The measurement method is described in detail below.

Five test specimens of 125 mm in length, 13 mm in width, and 5 mm in thickness that had been cut out from the foam were used. Each test specimen was vertically attached to a clamp, a 20 mm flame was twice applied to the test specimen for 10 seconds, and a judgment of V-0, V-1, or V-2 was made based on the burning behavior.

V-0: Flame burning time of both first and second applications is 10 seconds or less, total flame burning time and flameless burning time for second application is 30 seconds or less, total flame burning time for 5 test specimens is 50 seconds or less, no samples burn up to position of fixing clamp, and no ignition of cotton due to burning drippings

V-1: Flame burning time of both first and second applications is 30 seconds or less, total flame burning time and flameless burning time for second application is 60 seconds or less, total flame burning time for 5 test specimens is 250 seconds or less, no samples burn up to position of fixing clamp, and no ignition of cotton due to burning drippings

V-2: Flame burning time of both first and second applications is 30 seconds or less, total flame burning time and flameless burning time for second application is 60 seconds or less, total flame burning time for 5 test specimens is 250 seconds or less, and no samples burn up to position of fixing clamp, but ignition of cotton occurs due to burning drippings

Note that a judgment of "non-conforming" was made in cases that did not correspond to any of V-0, V-1, and V-2.

### (4) Maximum cell diameter, average value A for surface layer cell diameter, and average value B for central section cell diameter in foam, and average value A' for outermost layer cell diameter and average value B' for center cell diameter in foam particles

A foam obtained in each of the examples and comparative examples was sectioned in a thickness direction and then a cross-section thereof was observed with a magnification in a range of ×30 to ×400 using a 3D Real Surface View Microscope VE-9800 produced by Keyence Corporation in order to determine the maximum cell diameter, the average value A for surface layer cell diameter, and the average value B for central section cell diameter in the foam and the average value A' for outermost layer cell diameter and the average value B' for center cell diameter in foam particles of a bead foam, which are described below. The obtained values were used to calculate B/A in the case of a foam that was not a bead foam and to calculate B'/A' and B'/A in the case of a bead foam.

Note that in measurement of cell diameter, only cells for which the entirety thereof could be clearly observed in a cross-sectional image were used as measurement subjects, and a line segment having a largest length among the lengths of line segments joining two points on an outline of a cell was measured as the diameter of that cell. Also note that in a case in which at least the number of cells stipulated below were not present in a single cross-sectional image, cross-sectional images were added and measurements were performed until at least the stipulated number of cells was reached.

### (4-1) Maximum cell diameter in foam

In the case of a foam that was not a bead foam, the maximum cell diameter (µm) in the foam was taken to be the largest value among all measured values for surface layer cell diameter and central section cell diameter in the foam, which are described below. Moreover, in the case of a bead foam, the maximum cell diameter (µm) in the foam was taken to be the largest value among all measured values for surface layer cell diameter in the foam and outermost layer cell diameter and center cell diameter in foam particles, which are described below.

### (4-2) Average value A for surface layer cell diameter in foam

The "surface layer cell diameter" in a foam refers to cells that, among cells included entirely in the foam, are cells having an outline that partially coincides with a line indicating the surface of the foam in a situation in which a cross-section obtained through sectioning of the foam in a thickness direction is observed in a cross-sectional image. At least 15 surface layer cell diameters in the foam were measured, and the measured values were averaged to obtain an average value A (µm).

### (4-3) Average value B for central section cell diameter in foam

The "central section cell diameter" in a foam refers to cells that, among cells included entirely in the foam, are cells that are at least partially included in a range of 20% to 80% of thickness from the surface of the foam when the thickness of the foam is taken to be 100% and that are not in contact with the surface of the foam (i.e., are not surface layer cells) in a situation in which a cross-section obtained through sectioning of the foam in the thickness direction is observed in a cross-sectional image. At least 30 central section cell diameters in the foam were measured, and the measured values were averaged to obtain an average value B (µm).

### (4-4) Average value A' for outermost layer cell diameter in foam particles

The "outermost layer cell diameter" in foam particles of a foam formed of foam particles refers to cells that, for foam particles having the entirety thereof, surrounded by a line indicating the surface of the foam particle (foam particle outline), included in a range of 10% to 90% in a thickness direction from the surface of the foam, are cells having an outline partially coinciding with the line indicating the surface of the foam particle (foam particle outline) in a situation in which a cross-section obtained by sectioning the foam in a thickness direction is observed in a cross-sectional image. At least 15 outermost layer cell diameters in foam particles of a foam formed of foam particles were measured, and the measured values were averaged to obtain an average value A' (µm).

### (4-5) Average value B' for center cell diameter in foam particles

The "center cell diameter" in foam particles of a foam formed of foam particles refers to cells that, for foam particles having the entirety thereof, surrounded by a line indicating the surface of the foam particle (foam particle outline), included in a range of 10% to 90% in a thickness direction from the surface of the foam, are cells that are at least partially included in a range of 20% to 80% of diameter from the surface of the foam particle when the diameter of the foam particle is taken to be 100% and that are not in contact with the surface of the foam particle (i.e., are not outermost layer cells) in a situation in which a cross-section obtained by sectioning the foam in the thickness direction is observed in a cross-sectional image. At least 30 center cell diameters in foam particles of a foam formed of foam particles were measured, and the measured values were averaged to obtain an average value B' (µm).

### (5) Relative permittivity εr and dielectric dissipation factor tan δ of foam

A sample was prepared by cutting out a sample of 450 mm × 450 mm × 10 mm (thickness) from each of the foams described in the examples and comparative examples.

Next, the sample was set up in a dielectric lens-equipped transmission attenuation measurement jig of a frequency change method relative permittivity/dielectric dissipation factor measurement device DPS10-02 produced by KEYCOM Corp., and the amount of transmission attenuation and the amount of phase change were measured under room temperature (temperature: 26°C; humidity: 60%) conditions. Based on the obtained results and the thickness of the sample, fitting was performed for calculated values and actual measurement values of the amount of transmission attenuation and the amount of phase change, the relative permittivity and dielectric dissipation factor for when fitting was best were determined, and these were taken to be measured values for the relative permittivity and the dielectric dissipation factor.

### (6) Measurement of water absorption of resin composition in high-temperature and high-humidity environment

The water absorption of resin compositions (base resin pellets) described in the examples and comparative examples and of resin sheets described in the reference examples was measured by the following method.

First, resin compositions (base resin pellets) described in the examples and comparative examples were each used to produce a sheet of 0.2 mm to 1.0 mm (thickness) × 100 mm (length) × 100 mm (width) by hot pressing.

Next, the sheets obtained as described above and resin sheets of the reference examples were each dried in a 60°C oven for 1 day, and the mass thereof after drying was measured. Next, each of the sheets was caused to absorb water for 8 hours in a constant-temperature and constant-humidity tank that was adjusted to 60°C and 85% relative humidity. Once water absorption was complete, water droplets attached around the sheet were quickly wiped off, and then the mass of the sheet was measured. The water absorption (mass%) was calculated by the following equation.

Water absorption = 100 × {Mass after water absorption - Mass after drying (mass before water absorption)}/Mass after drying (mass before water absorption)

### (7) Hydrocarbon gas content in foam

A foam of 12 mm × 12 mm × 3 cm was cut out from each of the foams described in the examples and comparative examples, and the volume and mass thereof were measured. Thereafter, the cut-out sample was loaded into a headspace bottle and was heated to at least the temperature at which melting of the resin occurred (for example, 200°C or higher) and was held at that temperature for 2 hours. Next, gas contained in a space inside the headspace bottle was collected and was analyzed by gas chromatography (produced by Agilent Technologies, Inc.). The amount of hydrocarbon gas contained in the foam was quantified by assuming that all hydrocarbon gas contained in the collected gas originated from the foam.

### (7) Measurement of radio wave transmittance at 28 GHz

Radio wave transmittance at 28 GHz was measured by the following method for composites obtained in the examples and a spacer according to Reference Example 3.

First, the composites obtained in the examples and the spacer according to Reference Example 3 were each used to prepare a sample having a size of 200 mm by 200 mm by the thickness of that composite or spacer. Next, the sample was set up in a dielectric lens-equipped transmission attenuation measurement jig of a frequency change method relative permittivity/dielectric dissipation factor measurement device DPS10-02 produced by KEYCOM Corp., and the amount of transmission attenuation was measured under room temperature (temperature: 26°C; humidity: 60%) conditions. The measured amount of transmission attenuation (dB) was converted to a rate (%) of radio wave transmission so as to calculate the radio wave transmittance.

### (8) Measurement of absorbed puncture-impact energy

Absorbed puncture-impact energy was measured by the following method for composites obtained in the examples and a spacer according to Reference Example 3.

First, the composites obtained in the examples and the spacer according to Reference Example 3 were each used to prepare a sample having a size of 100 mm by 100 mm by the thickness of that composite or spacer. Next, the sample was set up in an impact compression tester IM10T-20HV produced by Imatek Systems Limited and was subjected to an impact test in accordance with JIS K 7211-2 under conditions of a 200 hemispherical striker, a 9.7 kg weight, and a 4.4 m/s impact velocity. The absorbed puncture-impact energy (J) was calculated from the obtained measurement values (graph of displacement (mm) and force (kN)).

### (Example 1)

After adding together 60 mass% of S201A (produced by Asahi Kasei Corporation) as a polyphenylene ether-based resin (PPE), 15 mass% of bisphenol A bis(diphenyl phosphate) (BBP) as a non-halogenated flame retardant, 10 mass% of high impact polystyrene resin (HIPS) having a rubber concentration of 6 mass%, and 15 mass% of GP685 (produced by PS Japan Corporation) as a general purpose polystyrene resin (PS), these materials were subjected to hot melt-kneading in an extruder and were subsequently extruded so as to produce base resin pellets.

In accordance with a method described in Example 1 of JP-H4-372630A, the base resin pellets were loaded into a pressure-resistant vessel, gas inside the vessel was purged with dry air, carbon dioxide (gas) was subsequently injected as a blowing agent, the base resin pellets were impregnated with carbon dioxide for 3 hours under conditions of a pressure of 3.0 MPa and a temperature of 10°C, and then the base resin pellets were removed from the pressure-resistant vessel and were immediately transferred to a foaming furnace where they were subjected to foaming through steam pressurized to a maximum of 210 kPa·G while rotating an impeller at 77 rpm so as to obtain foam particles. During the above, the time taken until introduction of pressurized steam started from the point at which impregnation ended and pressure release was completed was 10 seconds. The hydrocarbon gas content in the foam particles straight after foaming was measured by gas chromatography but was below the limit of detection (0.01 mass%).

Thereafter, the foam particles were loaded into a vessel and were subjected to pressurization treatment by introducing pressurized air into the vessel (pressure increased to 0.4 MPa over 4 hours and then held at 0.4 MPa for 16 hours). The resultant foam particles were loaded into a mold for in-mold shaping including steam holes and were heated by steam so as to cause expansion and fusion of the foam particles to one another. Thereafter, cooling was performed, and the resultant product was removed from the shaping mold to obtain a foam spacer formed of foam particles.

The results of evaluations performed with respect to the obtained foam (thickness: 10 mm) by the previously described evaluation methods are shown in Table 1.

As recorded in Table 1, the relative permittivity εr and dielectric dissipation factor tan δ were found to be sufficiently low, and electromagnetic wave loss was found to be sufficiently suppressed. It was also found that the "maximum cell diameter/electromagnetic wave wavelength at 28 GHz" for the foam was sufficiently low at less than 0.15 and that loss due to scattering or the like of electromagnetic waves can be reduced when the spacer is used in an electrical device that sends and receives electromagnetic waves.

### (Example 2)

A foam spacer was produced and the previously described evaluations thereof were performed in a similar manner to in Example 1 with the exception that the maximum vapor pressure of pressurized steam during production of foam particles from base resin pellets was changed to 260 kPa·G. The results are shown in Table 1.

### (Example 3)

A foam spacer was produced and the previously described evaluations thereof were performed in a similar manner to in Example 1 with the exception that the maximum vapor pressure of pressurized steam during production of foam particles from base resin pellets was changed to 280 kPa·G. The results are shown in Table 1.

### (Example 4)

A foam spacer was produced and the previously described evaluations thereof were performed in a similar manner to in Example 1 with the exception that the maximum vapor pressure of pressurized steam during production of foam particles from base resin pellets was changed to 330 kPa·G. The results are shown in Table 1.

Note that results obtained through measurement of the relative permittivity and dielectric dissipation factor of this foam at different frequencies (1 GHz, 5 GHz, 28 GHz, and 79 GHz) are shown in Table 2. The foam was found to be a spacer that has excellent dielectric characteristics in the range of a high-frequency band (1 GHz to 100 GHz) and that can suitably be used in a high-frequency band.

### (Example 5)

A foam spacer was produced and the previously described evaluations thereof were performed in a similar manner to in Example 4 with the exception that the production step of base resin pellets was changed as described below. The results are shown in Table 1.

### Base resin pellet production step:

Base resin pellets were produced by hot melt-kneading and subsequently extruding 60 mass% of GP685 (produced by PS Japan Corporation) as a polystyrene-based resin (PS) and 40 mass% S201A (produced by Asahi Kasei Corporation) as a polyphenylene ether-based resin (PPE) in an extruder.

### (Example 6)

A foam spacer was produced and the previously described evaluations thereof were performed in a similar manner to in Example 5 with the exception that in production of foam particles from base resin pellets, the time taken until heating (introduction of pressurized steam) started from the point at which release of impregnation pressure was completed was changed to 60 seconds. The results are shown in Table 1.

### (Example 7)

Foam particles (tertiary foam particles) were obtained by a similar method to a method described in the examples of JP-H4-372630A. The hydrocarbon gas content in the obtained foam particles (tertiary foam particles) straight after foaming was measured but was below the limit of detection (0.01 mass%). A foam spacer was produced by shaping the obtained foam particles by a similar method to in Example 1 and was evaluated as previously described. The results are shown in Table 1.

### (Example 8)

A foam was produced by the following procedure with reference to JP2006-077218A.

First, low-density polyethylene (PE) (density: 922 kg/m³; MI = 7.0 g/10 min) was supplied to a supply region of a screw-type extruder having a barrel internal diameter of 150 mm at a rate of 900 kg/hr together with 1.2 parts by mass of talc powder (particle diameter: 8.0 µm) as a cell nucleating agent and 0.8 parts by mass of a gas permeation modifier (stearic acid monoglyceride) relative to 100 parts by mass of the resin. The barrel temperature of the extruder was adjusted to 190°C to 210°C, 3 parts by mass of a foaming agent composed of 100 mass% of n-butane was injected from a foaming agent injection port installed at a tip of the extruder relative to 100 parts by mass of the resin, and this foaming agent was mixed with the molten resin composition to obtain a foamable molten mixture.

The foamable molten mixture was cooled to 108°C by a cooling device installed at an outlet of the extruder, was subsequently continuously extruded and foamed in an atmosphere of normal temperature and atmospheric pressure through an orifice plate having an opening shape with an average thickness of approximately 4.0 mm and a width of approximately 226 mm, and was shaped while adjusting the take up rate of resin foam so as to obtain a plate-shaped foam having a thickness of 52 mm, a width of 560 mm, a length of 1,000 mm, and a density of 100 kg/m³. The hydrocarbon gas content in this resin foam was 2.4 mass%. The resin foam was stored in a 40°C environment for 3 months and was evaluated as previously described once the hydrocarbon gas content was confirmed to be below the lower limit of detection (0.01 mass%). The results are shown in Table 1.

Note that secondary processing such as machining and adhesion was performed to obtain a spacer because the obtained foam was a plate-shaped foam.

### (Example 9)

A foam spacer was produced and the previously described evaluations thereof were performed in a similar manner to in Example 1 with the exception that the production step of base resin pellets was changed as described below and that the maximum vapor pressure of pressurized steam in the step of producing foam particles from the base resin pellets was changed to 70 kPa·G. The results are shown in Table 1.

### Base resin pellet production step:

Base resin pellets were produced by hot melt-kneading and subsequently extruding 100 mass% of GP685 (produced by PS Japan Corporation) as a polystyrene-based resin (PS) in an extruder.

### (Comparative Example 1)

A foam spacer was produced and the previously described evaluations thereof were performed in a similar manner to in Example 4 with the exception that in production of foam particles from base resin pellets, the time taken until heating (introduction of pressurized steam) started from the point at which release of impregnation pressure was completed was changed to 600 seconds. The results are shown in Table 1.

### (Comparative Example 2)

After adding together 60 mass% of S201A (produced by Asahi Kasei Corporation) as a polyphenylene ether-based resin (PPE), 15 mass% of bisphenol A bis(diphenyl phosphate) (BBP) as a non-halogenated flame retardant, 10 mass% of high impact polystyrene resin (HIPS) having a rubber concentration of 6 mass%, and 15 mass% of GP685 (produced by PS Japan Corporation) as a general purpose polystyrene resin (PS), these materials were subjected to hot melt-kneading in an extruder and were subsequently extruded so as to produce base resin pellets. The obtained base resin pellets were laid into a formwork and were then hot pressed at a temperature of 270°C to obtain a resin sheet.

The obtained resin sheet was evaluated as previously described. The results are shown in Table 1.

Note that in measurement of density, a sample of 30 mm-square and 10 mm in thickness was cut out from the obtained resin sheet, the mass W (g) of the sample was measured, and a value (W/V) obtained by dividing the mass W by the volume V (cm³) of the sample was determined as the density (g/cm³).

Also note that in measurement of the HDT, the thickness was changed to 4 mm. Measurement of the relative permittivity εr and dielectric dissipation factor tan δ was performed by cutting out a sample of 200 mm × 200 mm × 3 mm (thickness).

### (Comparative Example 3)

A foam spacer was produced and the previously described evaluations thereof were performed in a similar manner to in Example 5 with the exception that in production of foam particles from base resin pellets, the time taken until heating (introduction of pressurized steam) started from the point at which release of impregnation pressure was completed was changed to 600 seconds. The results are shown in Table 1.

### (Reference Example 1)

Water absorption in a high-temperature and high-humidity environment was measured for a polyetherimide sheet (produced by AS ONE Corporation; model no.: HJA-A4; 225 µm (thickness) × 100 mm × 100 mm). The result is shown in Table 1.

### (Reference Example 2)

Water absorption in a high-temperature and high-humidity environment was measured for an acrylic sheet (CLAREX^{®} (CLAREX is a registered trademark in Japan, other countries, or both) produced by Kuraray Co., Ltd.; 500 µm (thickness) × 100 mm × 100 mm). The result is shown in Table 1.

**Table 1**

| | Type of foam | Time from pressure release to heating in foaming of foam particles (s) | Expansion ratio (cm³/g) | HDT (°C) | Flame retardance | Maximum cell diameter (µm) | B/A of foam other than bead foam | B'/A of bead foam | B'/A' of bead foam | Water absorption of resin composition in high-temperature and high-lumidity environmert (mass%) | Hydrocarbon gas content (mass%) | Measurement at 28 GHz | | | |
|---|---|---|---|---|---|---|---|---|---|---|---|---|---|---|---|
| | | | | | | | | | | | | Maximum cell diameter (mm)/ Wavelength (mm) | Relative permittivity εr | Dielectric dissipation factor tan δ | (εr)^{1/2} × tan δ |
| Example 1 | Bead foamed | 10 | 3.5 | 115 | V-0 | 287 | - | 0.61 | 1.11 | 0.5 | nd. | 0.03 | 1.41 | 0.0043 | 0.0051 |
| Example 2 | Bead foamed | 10 | 5.0 | 113 | V-0 | 78 | - | 0.81 | 1.29 | 0.5 | nd. | 0.01 | 1.25 | 0.0029 | 0.0032 |
| Example 3 | Bead foamed | 10 | 7.0 | 109 | V-0 | 122 | - | 0.70 | 1.17 | 0.5 | nd. | 0.01 | 1.20 | 0.0017 | 0.0019 |
| Example 4 | Bead foamed | 10 | 10.0 | 104 | V-0 | 103 | - | 0.91 | 0.78 | 0.5 | nd. | 0.01 | 1.14 | 0.0014 | 0.0015 |
| Example 5 | Bead foamed | 10 | 10.0 | 125 | Non-conforming | 44 | - | 1.21 | 1.22 | 0.5 | nd. | 0.00 | 1.12 | 0.0002 | 0.0002 |
| Example 6 | Bead foamed | 60 | 10.5 | 125 | Non-conforming | 56 | - | 1.03 | 1.33 | 0.5 | nd. | 0.01 | 1.12 | 0.0002 | 0.0002 |
| Example 7 | Bead foamed | 10 | 15.0 | 38 | Non-conforming | 160 | - | 1.09 | 1.16 | 0.1 | nd. | 0.01 | 1.09 | 0.0002 | 0.0002 |
| Example 8 | Extrusion foamed | - | 10.0 | 42 | Non-conforming | 1439 | 1.56 | - | - | 0.1 | 2.4 (straight after shaping) → nd. | 0.13 | 1.12 | 0.0002 | 0.0002 |
| Example 9 | Bead foamed | 60 | 23.0 | 92 | Non-conforming | 66 | - | 1.02 | 1.00 | 0.9 | nd. | 0.01 | 1.04 | 0.0001 | 0.0001 |
| Comparative Example 1 | Bead foamed | 600 | 10.0 | 103 | V-0 | 1745 | - | 0.03 | 0.04 | 0.5 | nd. | 0.16 | 1.14 | 0.0014 | 0.0015 |
| Comparative Example 2 | Non-foamed | - | (1.1)^{∗1} | 112^{∗2} | V-0 | - | - | - | - | 0.5 | nd. | - | 2.73^{∗3} | 0.0077^{∗3} | 0.0127 |
| Comparative Example 3 | Bead foamed | 600 | 7.4 | 129 | Non-conforming | 1571 | - | 0.25 | 0.25 | 0.5 | nd. | 0.15 | 1.12 | 0.0002 | 0.0002 |
| Reference Example 1 | | | | | | | | | | 2.9 | | - | - | - | - |
| Reference Example 2 | | | | | | | | | | 2.3 | | | | | |

| | | | | | | | | | | | | | | | |
|---|---|---|---|---|---|---|---|---|---|---|---|---|---|---|---|
| n.d.: Not detected ^{∗}1: Expansion ratio not measured due to being resin sheet Density (g/cm³) measured as reference value and indicated in parenthesis ^{∗}2: Measured using sample with thickness of 4 mm ^{∗}3: Measured using sample of200 mm× 200 mm× 3 mm (thickness) | | | | | | | | | | | | | | | |

**Table 2**

| Measurement frequency | Maximum cell diameter (mm)/ Wavelength (mm) | Relative permittivity εr | Dielectric dissipation factor tan δ | (εr)^{1/2} × tan δ |
|---|---|---|---|---|
| 1 GHz | 0.0003 | 1.15 | 0.0008 | 0.0009 |
| 5 GHz | 0.0017 | 1.14 | 0.0010 | 0.0011 |
| 28 GHz | 0.0096 | 1.14 | 0.0014 | 0.0015 |
| 79 GHz | 0.0271 | 1.14 | 0.0016 | 0.0017 |

### (Example 21)

A resin sheet (thickness: 0.5 mm) produced through hot pressing of a PPE resin (XYRON 340Z produced by Asahi Kasei Corporation) at 270°C was affixed as a resin layer to the surface (skin surface) of the spacer according to Example 4 using an adhesive (SX720W produced by CEMEDINE Co., Ltd.) so as to obtain a composite.

The radio wave transmittance at 28 GHz and the absorbed puncture-impact energy of the obtained composite were measured. The results are shown in Table 3.

### (Example 22)

A composite was obtained by a similar method to in Example 21 with the exception that the thickness of the resin layer was changed. The radio wave transmittance at 28 GHz and the absorbed puncture-impact energy of the obtained composite were measured. The results are shown in Table 3.

### (Example 23)

A composite was obtained by a similar method to in Example 21 with the exception that the spacer according to Example 4 was cut so as to produce a cut surface of the foam and that affixing was performed such that the cut surface of the foam and the resin sheet were affixed to each other via the adhesive. The radio wave transmittance at 28 GHz and the absorbed puncture-impact energy of the obtained composite were measured. The results are shown in Table 3.

Note that although the thickness of the adhesive layer was calculated as an average thickness, the adhesive infiltrated at the cut surface, resulting in a mix of both thick sections and thin sections being present.

### (Reference Example 3)

The radio wave transmittance at 28 GHz and the absorbed puncture-impact energy of the spacer according to Example 4 were measured. The results are shown in Table 3.

**Table 3**

| | Spacer | Resin layer | Foam thickness (mm) | Adhesive layer thickness (mm) | Resin layer thickness (mm) | Radio wave transmittance at 28 GHz (%) | Absorbed puncture-impact energy (J) |
|---|---|---|---|---|---|---|---|
| Example 21 | Example 4 | PPE resin | 10 | 0.05 | 0.5 | 94.2 | 5.5 |
| Example 22 | Example 4 | PPE resin | 10 | 0.05 | 1 | 87.4 | 8.8 |
| Example 23 | Example 4 (foam cut surface) | PPE resin | 10 | 0.08 | 0.5 | 83.5 | 5.6 |
| Reference Example 3 | Example 4 | None | 10 | - | - | 99.1 | 2.7 |

### INDUSTRIAL APPLICABILITY

According to the present disclosure, it is possible to provide a spacer that has reduced transmission loss and that is used in an electrical device that sends and receives radio waves.

### REFERENCE SIGNS LIST

- 1: line indicating surface of foam
- 2, 3: cell
- 4: line indicating surface of foam particle (foam particle outline)
- 5, 6: cell

## Claims

1. A spacer used in an electrical device that sends and receives radio waves and comprising a foam that contains a resin composition containing a thermoplastic resin or a thermosetting resin as a base resin, wherein
in a case in which the foam is not a foam formed of foam particles, a ratio (B/A) of an average value B of diameters of cells included in a range of 20% to 80% in a thickness direction from a surface of the foam relative to an average value A of diameters of cells in contact with the surface of the foam is not less than 0.3 and less than 3.0,
in a case in which the foam is a foam formed of foam particles, for foam particles that are included in a range of 10% to 90% in a thickness direction from a surface of the foam, a ratio (B'/A') of an average value B' of diameters of cells included in a range of 20% to 80% in a radial direction from surfaces of the foam particles relative to an average value A' of diameters of cells in contact with the surfaces of the foam particles is not less than 0.3 and less than 3.0,
water absorption of the resin composition in a high-temperature and high-humidity environment is 2.2 mass% or less, and
when relative permittivity of the foam at 28 GHz is taken to be εr and a dielectric dissipation factor of the foam at 28 GHz is taken to be tan δ, (εr)^{1/2} × tan δ is 0.0120 or less.

2. The spacer according to claim 1, wherein the foam is not a foam formed of foam particles and has a maximum cell diameter of 1.500 mm or less.

3. The spacer according to claim 1, wherein the foam is formed of foam particles and has a maximum cell diameter of 1.500 mm or less.

4. The spacer according to claim 3, wherein a ratio (B'/A) of the average value B' of diameters of cells included in a range of 20% to 80% in a radial direction from surfaces of the foam particles relative to the average value A of diameters of cells in contact with the surface of the foam is not less than 0.3 and less than 3.0.

5. The spacer according to any one of claims 1 to 4, wherein the spacer is directly in contact with at least part of the electrical device.

6. The spacer according to any one of claims 1 to 5, wherein the foam has a flame retardance of V-2 or higher as measured by a 20 mm vertical flame test in accordance with a vertical method of UL-94.

7. The spacer according to any one of claims 1 to 6, wherein the foam has a heat deflection temperature of 60°C or higher as measured in accordance with ISO 75-1 and 75-2.

8. The spacer according to any one of claims 1 to 7, wherein hydrocarbon gas content in the foam is 1 mass% or less.

9. A method of producing a spacer that is a method of producing the spacer according to claim 1 in a case in which the foam is formed of foam particles, comprising a step of starting to heat a base resin less than 600 seconds from completion of pressure release after a gas has been pressurized into the base resin.

10. A composite comprising: the spacer according to any one of claims 1 to 8; and a resin layer having a thickness of 0.1 mm or more.
